Europäisches Patentamt

European Patent Office

Office européen des brevets

(19)

(11) Veröffentlichungsnummer: **0 220 206 B1**

# EUROPÄISCHE PATENTSCHRIFT

(12)

(45) Veröffentlichungstag der Patentschrift: **16.10.91**

(51) Int. Cl.⁵: **G01P 21/00**

(21) Anmeldenummer: **86901801.0**

(22) Anmeldetag: **14.03.86**

(86) Internationale Anmeldenummer:
**PCT/DE86/00108**

(87) Internationale Veröffentlichungsnummer:
**WO 86/06172 (23.10.86 86/23)**

(54) **VERFAHREN ZUR ÜBERWACHUNG EINES DREHZAHLGEBER-SIGNALS.**

(30) Priorität: **18.04.85 DE 3513937**

(43) Veröffentlichungstag der Anmeldung:
**06.05.87 Patentblatt 87/19**

(45) Bekanntmachung des Hinweises auf die
Patenterteilung:
**16.10.91 Patentblatt 91/42**

(84) Benannte Vertragsstaaten:
**DE FR GB SE**

(56) Entgegenhaltungen:
**WO-A-80/01963        DE-A- 2 547 869**
**DE-A- 3 342 754       FR-A- 2 328 967**
**FR-A- 2 358 298       FR-A- 2 418 465**

**Patents Abstracts of Japan, vol. 6, number
255 (P-162)(1133) December 14, 1982 & JP, A,
151860**

(73) Patentinhaber: **ROBERT BOSCH GMBH**
**Postfach 50**
**W-7000 Stuttgart 1(DE)**

(72) Erfinder: **BRÄUNINGER, Jürgen**
**Kaiserslauterer Str. 60**
**W-7000 Stuttgart(DE)**
Erfinder: **HOLMES, James**
**860 Foxworth**
**Lombard, Illinois 60148(US)**
Erfinder: **SIEBER, Albrecht**
**Hans-Thoma-Str. 11**
**W-7140 Ludwigsburg(DE)**

Rank Xerox (UK) Business Services

## Beschreibung

### Stand der Technik

Eine der wichtigsten Betriebskenngrößen für die Steuerung und/oder Regelung einer Brennkraftmaschine ist die Drehzahl der Brennkraftmaschine. Diese wird mittels entsprechender Geber erfaßt und gegebenenfalls von Signalanpassungen und -verstärkungen für die Weiterverarbeitung aufbereitet. Es ist bekannt, den Drehzahlgeber dahingehend zu überwachen, ob er ein Ausgangssignal liefert oder nicht. Bei vorhandenem Ausgangssignal wird dieses für die Steuerung und/oder Regelung weiterverwendet, während ein nicht vorhandenes Ausgangssignal des Drehzahlgebers entsprechende Fehlerfunktionen auslöst.

Es ist nun möglich, daß der Drehzahlgeber ein Ausgangssignal liefert, dieses jedoch keinen sinnvollen Wert aufweist. Derartige sinnlose Drehzahlsignale können z. B. durch elektromagnetische Einstreuungen, durch Defekte des Drehzahlgebers oder auch durch mechanische Defekte, z. B. des mit dem Drehzahlgeber in Wirkverbindung stehenden, rotierenden Teils der Brennkraftmaschine, verursacht werden. Wird der Drehzahlgeber lediglich dahingehend überwacht, ob er ein Ausgangssignal liefert oder nicht, werden derartige sinnlose Signale nicht als fehlerhaft erkannt, sondern als korrekte Drehzahlsignale zur Weiterverwertung weitergegeben.

Es sind jedoch auch Einrichtungen zur Überwachung eines Drehzahlgebers bekannt, bei denen überwacht wird, ob das Drehzahlgeber-Signal eine Plausibilitätsbedingung erfüllt. So ist beispielsweise aus der DE-A-33 42 754 eine Einrichtung zum Feststellen einer Störung in einem Signalgenerator an einem Verbrennungsmotor bekannt, bei welcher ein elektrisches Signal in Abhängigkeit von der Drehzahl erzeugt wird. Zur Überwachung der Funktionsfähigkeit des Signalgenerators wird die Periode des elektrischen Signals daraufhin überwacht, ob sie einen vorbestimmten Wert To überschreitet oder nicht. Falls diese Bedingung erfüllt ist, wird aus der Periodendauer ein Drehzahlsignal berechnet, das mit einer Bezugsdrehzahl $N_r$ verglichen wird. Aus der Kombination beider Maßnahmen wird eine Fehlfunktion des Signalgenerators erkannt.

Eine weitere Einrichtung und ein Verfahren zum Feststellen des ordnungsgemäßen Arbeitens eines Drehzahlmessers sowie zum Anzeigen eines Fehlers ist aus der FR-A 23 28 967 bzw. aus der zur selben Patentfamilie gehörenden DE-A 25 47 869 bekannt. Dabei wird die Periodendauer des vom Drehzahlgeber abgegebenen Signals gemessen und der Meßwert mit einem, einen zulässigen Bereich zu großen Zeiten hin, abgrenzenden Grenzwert verglichen, wobei bei Fehlererkennung, also wenn die gemessene Periodendauer nicht unterhalb des Grenzwertes liegt, ein Signal abgegeben wird. Dieser Grenzwert wird entweder als fester Wert definiert oder aber, wie bei einer Blockierschutzanlage, bei der sehr kleine Drehzahlen bis nahe an die Drehzahl Null zulässig sind, d.h. die Periodendauer sehr groß werden kann, als Wert definiert, der größer als die Periodendauer des vorletzten Impulses vor dem Stillstand des Rades ist.

Mit der genannten Einrichtung wird also im normalen Betrieb ein fester Grenzwert und bei Drehzahlen, wie sie unmittelbar vor dem Stillstand des Fahrzeuges auftreten, ein deutlich anderer Grenzwert verwendet, wobei im letzteren Fall der Grenzwert innerhalb von durch maximal mögliche Verzögerung bzw. Beschleunigung erzwungenen Grenzen schwanken kann. Eine ständige Anpassung des Grenzwertes an vorhergehende Periodendauern, bzw. Drehzahlwerte findet nicht statt, wodurch irrtümliche Fehleranzeigen nicht ausgeschlossen werden können.

Aus der FR-A 23 58 298 ist eine Einrichtung zum Regeln des Bremsdruckes für Blockierschutzvorrichtungen bekannt, bei der eine zur Rotationsgeschwindigkeit eines Rades proportionale Folge von Signalen erzeugt wird, deren Periodendauer mit einer Bezugsperiodendauer, die in Abhängigkeit von der vorhergehenden Periodendauer festgelegt wird, verglichen wird, wobei bei Über- oder Unterschreitung der Bezugsperiodendauer geeignete Maßnahmen zur Veränderung des Bremsdruckes ergriffen werden. Eine Anzeige der Abweichung der Periodendauer von der Bezugsperiodendauer oder eine Fehlererkennung bei einer solchen Abweichung ist jedoch nicht vorgesehen.

### Vorteile der Erfindung

Das erfindungsgemäße Verfahren zur Überwachung eines Drehzahlgeber-Signals mit den Merkmalen des Patentanspruchs 1 hat gegenüber dem beschriebenen Stand der Technik den Vorteil, daß sinnlose Signale zuverlässig erkannt werden und eine irrtümliche Fehlererkennung vermieden wird, wodurch sichergestellt wird, daß nur die tatsächlich korrekten Drehzahlgeber-Ausgangssignale zur Weiterverwendung weitergegeben werden. Dazu findet bei dem erfindungsgemäßen Verfahren findet also eine Plausibilitätsüberwachung des Drehzahlgeber-Signals hinsichtlich eines oberen und unteren Grenzwertes statt, wobei für jedes neue Drehzahlgeber-Ausgangssignal Grenzwerte vorgegeben werden, die jeweils wenigstens abhängig vom letzten Drehzahlgeber-Ausgangssignal sind. Überschreitet das neue Drehzahlsignal diese Grenzwerte nach oben bzw. nach unten, so erkennt die Überwachung dieses Drehzahlgeber-Signal als nicht sinnvoll. Befindet sich hingegen das neue Drehzahlgeber-Signal innerhalb der vorgegebenen Grenzen, so wird dieses Drehzahlsignal zur Weiterverarbeitung weitergegeben.

In einer weiteren vorteilhaften Ausgestaltung der Erfindung wird bei jedem erkannten sinnlosen Drehzahlsignal ein Merker gesetzt, der zur Folge hat, daß ein als an sich korrekt erkanntes Drehzahlsignal erst dann zur Weiterverwendung weitergegeben wird, wenn dieser Merker eine bestimmte, vorgebbare Zeitdauer vorhanden war. Mit Hilfe dieses Merkers ist es daher möglich, ein dauerndes und schnelles Hin- und Herschalten zwischen sinnlosen und korrekten Drehzahlsignalen und damit zwischen normalem Ablauf und Fehlerfunktionen zu verhindern.

Schließlich ist es auch noch möglich, die Überwachung des Drehzahlgeber-Signals nur dann durchzuführen, wenn dieses Signal einen vorbestimmbaren Wert überschritten hat. Dies hat den Vorteil, mögliche, während des Start der Brennkraftmaschine auftretende Störungen zu unterbinden.

Weitere vorteilhafte Weiterbildungen und Ausgestaltungen der Erfindung ergeben sich aus der nachfolgenden Beschreibung mit der zugehörigen Zeichnung, sowie aus den abhängigen Patentansprüchen.

Zeichnung.

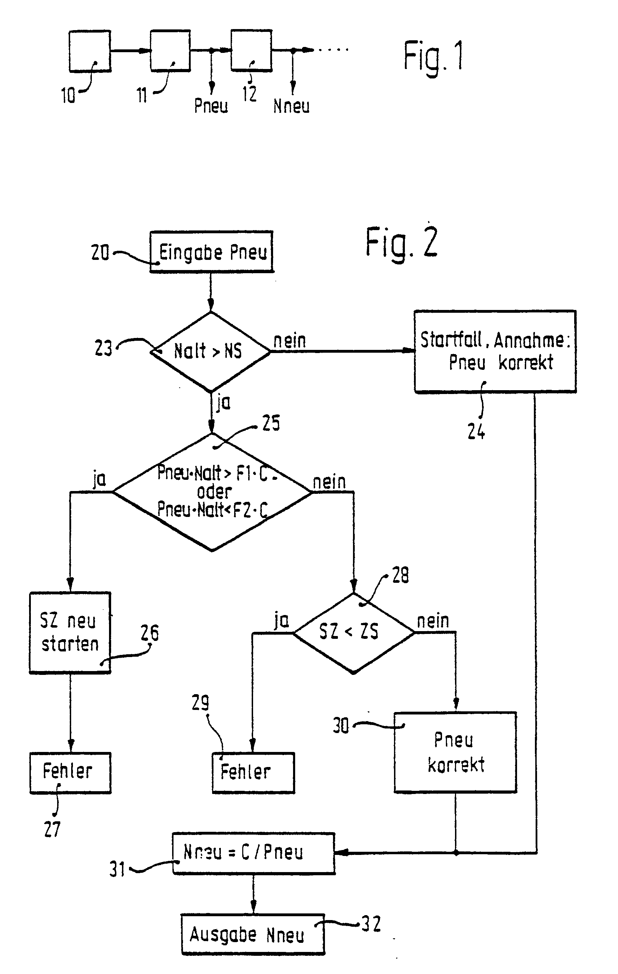

Ein Ausführungsbeispiel der Erfindung ist in der Zeichnung dargestellt und wird in der nachfolgenden Beschreibung näher erläutert. Dabei zeigt Figur 1 ein Blockschaltbild einer erfindungsgemäßen Einrichtung, sowie Figur 2 ein Ablaufdiagramm des erfindungsgemäßen Verfahrens.

Beschreibung des Ausführungsbeispieles

Das nachfolgend beschriebene Ausführungsbeispiel betrifft die Überwachung des Ausgangssignals eines Drehzahlgebers. Prinzipiell ist es jedoch auch möglich, mit Hilfe des erfindungsgemäßen Verfahrens, beliebige Signale, deren Änderungen sich innerhalb bekannter Grenzen vollziehen, zu überwachen. Das beschriebene Ausführungsbeispiel kann auf verschiedene Arten und Weisen realisiert werden, so z.B. mit Hilfe eines entsprechend programmierten elektronischen Rechengeräts, mittels sonstiger elektronischer digitaler Schaltungen oder auch mit Hilfe von analogen Schaltungen.

In der Figur 1 bilden ein Drehzahlgeber 10, eine Signalanpassung 11, sowie eine Signalüberwachung 12 eine Serienschaltung. Dabei handelt es sich bei dem Eingangssignal der Signalüberwachung 12 um einen Zeitwert Pneu, bei dem Ausgangssignal hingegen um einen neuen Drehzahlwert Nneu. Das Ausgangssignal des Drehzahlgebers 10 hat z.B. die Form einer Impulsfolge, deren Frequenz proportional zur Drehzahl ist. Mit Hilfe der Signalanpassung 11 wird dann die Zeit zwischen den einzelnen Impulsen gemessen und als Zeitwert Pneu ausgegeben. Das Signal Pneu hat also die Bedeutung einer zur Drehzahl der Brennkraftmaschine umgekehrt proportionalen Zeitdauer. Die Signalüberwachung 12 erzeugt dann aus dem Zeitwert Pneu durch bestimmte Rechenoperationen den neuen Drehzahlwert Nneu, der dann in beliebiger Art und Weise, also z.B. analog, digital usw., zur Verfügung gestellt wird. Im Prinzip, insbesondere bei einem fehlerfrei arbeitenden Drehzahlgeber hat daher jeder Zeitwert Pneu einen neuen Drehzahlwert Nneu zur Folge.

Figur 2 zeigt den Ablauf des erfindungsgemäßen Verfahrens zur Überwachung eines Drehzahlgeber-Signals. Dieser Ablauf ist durch die Signalüberwachung 12 der Figur 1 realisiert, und zwar z.B. in der Form eines entsprechenden Programmablaufs für ein elektronisches, programmierbares Rechengerät.

Der Block 20 der Figur 2 symbolisiert die Eingabe des Zeitwerts Pneu in die Signalüberwachung 12 der Figur 1 und damit den Beginn der Überwachung und Überprüfung dieses eingegebenen Zeitwerts Pneu.

Liegt ein Zeitwert Pneu vor, so wird im nachfolgenden Block 23 überprüft, ob der zuletzt berechnete Drehzahlwert Nalt größer ist als ein vorgebbarer Drehzahlschwellwert NS. Mit Hilfe dieses Drehzahlschwellwerts NS ist es möglich, Störungen, die während des Starts auftreten können, zu unterbinden. Ist daher der zuletzt berechnete, alte Drehzahlwert Nalt kleiner als die Drehzahlschwelle NS, so liegt der genannte Startfall vor, und es wird gemäß des Blocks 24 angenommen, daß der neu eingegebene Zeitwert Pneu korrekt ist. Es wird also in diesem Startfall keine Plausibilitätskontrolle für den Zeitwert Pneu durchgeführt, sondern dieser Wert Pneu direkt weitergegeben.

Liegt kein Startfall vor, ist also der alte Drehzahlwert Nalt größer als die Drehzahlschwelle NS, so wird die Überwachung mit dem Block 25 fortgesetzt. In diesem Block 25 wird die eigentliche Plausibilitätskontrolle durchgeführt. Zu diesem Zweck wird der neue Zeitwert Pneu mit einem entsprechend bewerteten alten Zeitwert Palt verglichen. Wie später noch ausgeführt wird, ergibt sich ein neuer Drehzahlwert Nneu durch die Division einer Konstanten C durch den neuen Zeitwert Pneu. Dies bedeutet gleichzeitig, daß sich der alte Zeitwert Palt auch durch die Division der Konstanten C durch den alten Drehzahlwert Nalt darstellen läßt. Verwertet man diesen Zusammenhang bei der Überprüfung des neuen Zeitwerts Pneu mit den schon genannten Grenzen, so ergibt sich das folgende:

$$F2 \times Palt < Pneu < F1 \times Palt$$

bzw. mit Palt = C/Nalt:

$$F2 \times C < Pneu \times Nalt < F1 \times C.$$

Bei den Werten F1 und F2 handelt es sich um Faktoren, die normalerweise konstant, unter Umständen jedoch auch variabel sein können, von denen jedoch in jedem Fall der Faktor F1 größer ist als 1 und der Faktor F2 kleiner. Dadurch wird mit Hilfe des Faktors F2 eine obere Grenze des Zeitwerts Pneu festgelegt, sowie mittels des Faktors F1 eine untere Grenze.

Befindet sich nun der Zeitwert Pneu außerhalb der vorgegebenen Grenzen, was mit Hilfe der zuletzt genannten Gleichungen festgestellt wird, so wird ein Sperrzähler SZ im nachfolgenden Block 26 neu gestartet, um danach mit Hilfe des Blocks 27 entsprechende Fehlerfunktionen und/oder -anzeigen auszulösen. Befindet sich hingegen der Zeitwert Pneu innerhalb der durch die Faktoren F1 und F2 vorgegebenen Grenzen, so wird der Ablauf der erfindungsgemäßen Überwachung mit dem Block 28 fortgesetzt.

Wie ausgeführt wurde, wird in dem Fall, daß der Zeitwert Pneu.außerhalb der im Block 25 vorgegebenen Grenzen sich befindet, mittels des Blocks 26 ein Sperrzähler SZ neu gestartet. Dieser Sperrzähler SZ wird im Block 28 dahingehend überprüft, ob er eine vorgebbare Zählschwelle ZS überschritten hat oder nicht. Ist der Wert des Sperrzählers SZ kleiner als die Zählschwelle ZS, so wird mit Hilfe des Blocks 29 analog zum Block 27 eine Fehlerreaktion ausgelöst. Weist der Sperrzähler SZ hingegen einen größeren Wert als die Zählschwelle ZS auf, so hat dies zur Folge, daß im Block 30 der Zeitwert Pneu als korrekt erkannt wird.

Bei dem bisher beschriebenen Verfahren gibt es also zwei Möglichkeiten, bei denen der Zeitwert Pneu als korrekt erkannt werden kann, nämlich im Startfall (Block 24) und wenn der Zeitwert Pneu innerhalb vorgegebener Grenzen (Block 25) sich befindet, und gleichzeitig der Sperrzähler SZ einen größeren Wert als die Zählschwelle ZS (Block 28) aufweist. Aus diesem Grund sind in den beiden zuletzt genannten Fällen die Blöcke 24 und 30 mit einem weiteren Block 31 verbunden, mit dessen Hilfe aus dem korrekten Zeitwert Pneu der neue Drehzahlwert Nneu berechnet wird. Dies wird dadurch erreicht, daß die schon erwähnte Konstante C durch den Zeitwert Pneu dividiert wird. Die Konstante C ist dabei abhängig von der jeweiligen Geberanordnung.

Zuletzt wird durch den Block 32 der neue Drehzahlwert Nneu ausgegeben und kann dadurch z.B. das Ausgangssignal der Signalüberwachung 12 der Figur 1 bilden. Beim nächsten Durchlauf der gesamten beschriebenen Überwachung bildet dieser neue Drehzahlwert Nneu dann den alten Drehzahlwert Nalt.

Prinzipiell ist es auch möglich, das gesamte Verfahren ohne den Sperrzähler zu betreiben. Der besondere Vorteil des Sperrzählers liegt jedoch darin, daß periodisch kurzfristig auftretende Fehler zu keinem Hin- und Herschalten zwischen einer Notfunktion bzw. Fehlerfunktion und den Normalfunktionen führt. Dabei ist noch anzumerken, daß der Sperrzähler entweder in einem festen Zeittakt oder immer dann, wenn ein neuer Zeitwert Pneu auftritt, inkrementiert wird. Mit Hilfe der Zählschwelle ZS wird dadurch erst dann wieder ein neuer Zeitwert Pneu als korrekt erkannt, wenn eine bestimmte Zeitdauer vergangen ist.

Ebenfalls ist es möglich, zusätzlich zur beschriebenen besonderen Behandlung des Startfalls, nach einem derartigen Startfall, insbesondere nach Überschreiten des alten Drehzahlwertes Nalt über die Drehzahlschwelle NS zuerst eine Zeitverzögerung zu starten, und erst nach Ablauf dieser Zeitverzögerung die eigentliche Plausibilitätsüberwachung durchzuführen. Dadurch ist es möglich, die unter Umständen beim Start auftretenden Störungen noch sicherer zu vermeiden.

Eine weitere vorteilhafte Weiterbildung der Erfindung besteht darin, daß in dem Fall, in dem innerhalb einer Zeitdauer Q, die länger ist als der letzte gemessene alte Zeitwert Palt, kein neuer Zeitwert Pneu vorliegt, weil sich z.B. die Zeit zwischen den einzelnen Impulsen vergrößert hat, zum Zwecke der Überwachung den Wert Q als neuen Zeitwert Pneu zu verwenden. In diesem Fall darf jedoch nach einer Überwachung der Block 31 nicht durchgeführt werden, es darf also kein neuer Drehzahlwert Nneu in Abhängigkeit von dem vorgegebenen Wert Q gebildet werden. Dieser neue Drehzahlwert Nneu kann bei der beschriebenen Weiterbildung erst dann wieder gebildet werden, wenn tatsächlich wieder ein neuer Zeitwert Pneu vorliegt.

Der besondere Vorteil des erfindungsgemäßen Verfahrens zur Überwachung eines Drehzahlgeber-Ausgangssignals besteht insbesondere darin, daß die gesamte Überwachung mittels eines minimalen Rechenaufwands durchgeführt wird, insbesondere ist nur eine einzige Multiplikation, nämlich Pneu x Nalt, notwendig, und daß ebenfalls nur ein minimaler Speicheraufwand notwendig ist, nämlich nur für den Sperrzähler SZ. Bei den Produkten F1 x C und F2 x C handelt es sich um Konstanten, die sich nicht verändern und dadurch einmalig vorgegeben werden können, und bei den beiden variablen Werten Pneu und Nneu bzw. Nalt handelt es sich um Werte, die in jedem Fall zwischengespeichert werden müssen.

**Patentansprüche**

1. Verfahren zur Überwachung eines Drehzahlgeber-Signals einer Brennkraftmaschine mit einem Drehzahlgeber zur Erzeugung des Drehzahlgeber-Signals sowie mit einer Einrichtung, die das Drehzahlgeber-Signal durch Vergleich mit einem oberen veränderbaren Grenzwert hinsichtlich seiner Plausibilität überwacht und bei Überschreiten des Grenzwertes eine Fehlerfunktion und/oder -anzeige auslöst, dadurch gekennzeichnet, daß das Drehzahlgeber-Signal zusätzlich hinsichtlich eines unteren Grenzwertes überwacht wird, wobei jeder obere und untere Grenzwert abhängig vom vorhergehenden Drehzahlgeber-Signal gebildet wird und auch beim Unterschreiten des unteren Grenzwertes die Fehlerfunktion und/oder -anzeige ausgelöst wird.

2. Verfahren nach Anspruch 1, dadurch gekennzeichnet, daß ein Merker bei jedem Überschreiten der Grenzwerte gesetzt wird, wobei der Merker einen Sperrzähler (SZ) umfaßt, dessen Wert gegebenenfalls mit einer vorgebbaren Zählschwelle (ZS) verglichen wird und abhängig vom Vergleichsergebnis die Fehlerfunktion und/oder -anzeige ausgelöst wird.

3. Verfahren nach Anspruch 2, dadurch gekennzeichnet, daß die Fehlerfunktion und/oder -anzeige ausgelöst wird, wenn der Wert des Sperrzählers (SZ) kleiner ist als die Zählschwelle.

4. Verfahren nach Anspruch 2 oder 3, dadurch gekennzeichnet, daß eine Zeitdauer (Q) abhängig vom vorhergehenden Abstand der Impulse des Drehzahlgeber-Signals gebildet wird und die Fehlerfunktion und/oder -anzeige ausgelöst wird, wenn der Merker nicht länger als diese Zeitdauer (Q) vorhanden bzw. gesetzt war.

5. Verfahren nach einem der Ansprüche 1 bis 4, dadurch gekennzeichnet, daß eine Plausibilitätsüberwachung des Drehzahlgeber-Signals nur dann stattfindet, wenn das vorhergehende, alte Drehzahlgeber-Signal größer ist als ein vorgebbarer Wert.

## Claims

1. Process for monitoring a speed transmitter signal of an internal-combustion engine, having a speed transmitter for generating the speed transmitter signal as well as having a device which monitors the speed transmitter signal with regard to its plausibility by comparison with an upper variable limit value and, if the limit value is overshot, initiates a fault function and/or indication, characterised in that the speed transmitter signal is monitored additionally with regard to a lower limit value, each upper limit value and lower limit value being formed as a function of the preceding speed transmitter signal and the fault function and/or indication also being initiated if the lower limit value is undershot.

2. Process according to Claim 1, characterised in that with each overshooting of the limit values a marker is set, the marker comprising a blocking counter (SZ), the value of which is compared if need be with a predeterminable counting threshold (ZS) and, depending on the result of the comparison, the fault function and/or indication is initiated.

3. Process according to Claim 2, characterised in that the fault function and/or indication is initiated whenever the value of the blocking counter (SZ) is less than the counting threshold.

4. Process according to Claim 2 or 3, characterised in that a period of time (Q) is formed as a function of the preceding interval of the pulses of the speed transmitter signal and the fault function and/or indication is initiated whenever the marker has not been present or set longer than this period of time (Q).

5. Process according to one of Claims 1 to 4, characterised in that a plausibility monitoring of the speed transmitter signal takes place only when the preceding, old speed transmitter signal is greater than a predeterminable value.

## Revendications

1. Procédé de contrôle d'un signal de tachymètre d'un moteur à combustion interne comportant un tachymètre formant un signal ainsi qu'une installation qui contrôle le signal du tachymètre par comparaison avec une valeur limite supérieure variable pour vérifier sa plausibilité et en cas de dépassement de la valeur limite, l'installation déclenche une fonction d'erreur et/ou une indication d'erreur, procédé caractérisé en ce que le signal du tachymètre est en outre contrôlé par rapport à une limite inférieure et chaque limite supérieure et inférieure est formée en fonction du signal précédent du tachymètre et lors du dépassement vers le bas de la limite inférieure, on déclenche également la fonction d'erreur et/ou l'affichage d'erreur.

2. Procédé selon la revendication 1, caractérisé en ce qu'on met un repère à chaque dépassement des limites et ce repère se compose d'un compteur à blocage (SZ) dont la valeur est comparée le cas échéant à un seuil de comptage prédéterminé (ZS) et en fonction du résultat de la comparaison, on déclenche la fonction d'erreur et/ou l'indication d'erreur.

3. Procédé selon la revendication 2, caractérisé en ce qu'on déclenche la fonction d'erreur et/ou l'indication d'erreur lorsque l'état de comptage du compteur à blocage (SZ) est inférieur au seuil de comptage.

4. Procédé selon la revendication 2 ou 3, caractérisé en ce qu'on forme une durée (Q) en fonction d'un écart prédéterminé des impulsions du signal du tachymètre et on déclenche la fonction d'erreur et/ou l'indication d'erreur si le repère n'existe pas ou n'est pas mis à l'état plus longtemps que cette durée (Q).

5. Procédé selon l'une des revendications 1 à 4, caractérisé en ce qu'on effectue un contrôle de plausibilité du signal du tachymètre que si l'ancien signal de tachymètre, précédent, est supérieur à une valeur prédéterminée.

Fig. 1

10    11    Pneu    12    Nneu

---

Fig. 2

20 — **Eingabe Pneu**

23 — ◇ **Nalt > NS**
— nein → **Startfall, Annahme: Pneu korrekt** — 24

ja ↓

25 — ◇ **Pneu·Nalt > F1·C· oder Pneu·Nalt < F2·C**

ja ↓

**SZ neu starten** — 26

28 — ◇ **SZ < ZS**
ja / nein

**Fehler** — 27

29 — **Fehler**

30 — **Pneu korrekt**

31 — **Nneu = C / Pneu**

**Ausgabe Nneu** — 32

---

7